# EUROPÄISCHE PATENTSCHRIFT

(11) **EP 0 547 513 B1**
(45) Veröffentlichungstag und Bekanntmachung des Hinweises auf die Patenterteilung: **15.05.1996**
(21) Anmeldenummer: 92121107.4
(22) Anmeldetag: 11.12.1992
(51) Int. Cl.: B23K 3/06, B23K 9/12

(54) **Elektromagnetische Vorschubeinrichtung zur variablen Vorwärtsbewegung von Löt- oder Schweissdraht in einem Lötkolben oder einer Schweisspistole**
Electromagnetic feeding device for the variable progression of a soldering or a welding wire in a soldering iron or a welding gun
Appareil d'avance électromagnétique pour le mouvement en avant variable de métal d'apport en fil de brasage tendre ou de baguette dans un fer ou un pistolet à souder

(30) Priorität: 16.12.1991 DE 9115533 U
(43) Veröffentlichungstag der Anmeldung: 23.06.1993
(73) Patentinhaber: Partel, Robert, CH-6300 Zug (CH)
(72) Erfinder: Partel, Robert, CH-6300 Zug (CH)
(74) Vertreter: Riebling, Peter, Dr.-Ing., Patentanwalt

(56) Entgegenhaltungen:
- WO-A-89/01379
- DE-C- 3 639 645
- US-A- 3 990 622
- DATABASE WPIL Week 8526, Derwent Publications Ltd., London, GB; AN 85-157612 & SU-A-1 127 719 (KARPOV G G)

## Beschreibung

Die Erfindung betrifft eine Vorschubeinrichtung nach dem Oberbegriff des Schutzanspruchs 1, wobei eine derartige Vorschubeinrichtung beispielsweise mit dem Gegenstand der DE 36 39 645 oder SU-A-1 127 719 bekannt geworden ist. Bei dieser bekannten Vorschubeinrichtung wird die Vorschubbewegung durch eine elektromotorisch drehend angetriebene Scheibe erreicht, die mit einer Kulissenführung zusammenwirkt, welche die Drehbewegung in eine Längsbewegung eines Schlittens umsetzt. Im Bereich dieses Schlittens ist ein Kniehebelmechanismus angeordnet, der mit einer Zange zusammenwirkt, so daß bei der Verschiebung des gesamten Schlittens die Zange jeweils in Eingriff mit dem zu transportierenden Draht kommt und diesen Draht wahlweise klemmt und wieder freiläßt.

Nachteil der bekannten Vorschubeinrichtung ist, daß es sich um einen komplizierten und aufwendigen Antriebsmechanismus handelt, der sehr raumgreifend gebaut ist und der im übrigen nur verschleißanfällig arbeitet.

Bei einer weiteren bekannten Vorrichtung nach der US-PS 3 990 622 sowie der WO-A-8 901 379 wird der Lötdraht dadurch transportiert, daß formschlüssig am Lötdraht eine verzahnte Scheibe angreift, die drehend schubweise angetrieben ist. Auf diese Weise wird durch den Drehantrieb der verzahnten Scheibe ein intermettierender Vorschub des Lötdrahtes erreicht.

Nachteil dieser bekannten Vorschubeinrichtung ist jedoch, daß die Anordnung ebenfalls relativ raumgreifend arbeitet, weil die Transportstation nicht in einem Lötkolben integriert werden kann, daß sie mit elektromechanisch bewegten Teilen arbeitet, was sie verschleißanfällig und wartungsbedürftig macht.

Der Erfindung liegt deshalb die Aufgabe zugrunde, eine Vorschubeinrichtung der eingangs genannten Art so weiterzubilden, daß sie klein und raumsparend in einem Lötkolben integriert werden kann, daß sie im wesentlichen keine Verschleißteile aufweist und daß sie kostengünstig herstellbar ist.

Zur Lösung der gestellten Aufgabe ist die Erfindung durch die technische Lehre des Anspruchs 1 gekennzeichnet.

Mit dieser technischen Lehre wird der wesentliche Vorteil erzielt, daß ein außerordentlich gedrängter und raumsparender Aufbau erzielt wird, weil ein derartiger Anker mit dazugehörender Spule im Lötkolbengriff eines Lötkolbens selbst integriert werden kann, ohne daß es hier bei der Konstruktion von raumgreifenden Lötpistolen bedarf, wie sie zum Stand der Technik gehören.

Mit der Integration der neuerungsgemäßen Einrichtung in einem Lötkolben besteht somit der wesentliche Vorteil, daß der Lötkolben fein dosiert von Hand geführt werden kann, ohne daß es hierbei der Führung einer aufwendigen und schweren Lötpistole bedarf.

Im übrigen besteht damit der Vorteil, daß wegen des Vorhandenseins nur weniger bewegter Teile (Anker und Klemmteil) die Herstellung sehr kostengünstig ist, daß praktisch keine Wartung notwendig ist und daß die Anordnung leise arbeitet.

Wesentlich ist also, daß im Bereich einer stromdurchflossenen Spule eine hin- und hergehende Bewegung eines Ankers erzeugt wird, wobei es für die Erzeugung dieser hin- und hergehenden Bewegung mehrere Möglichkeiten gibt.

In einer ersten Ausführungsform ist vorgesehen, daß der Anker aus einem Weicheisenmaterial besteht und daß die Stromspule von einem pulsierenden Gleichstrom durchflossen wird. In der einfachsten Ausführungsform wird hierzu die Netzwechselspannung einseitig gleichgerichtet, wodurch also eine Halbwelle abgeschnitten wird und mit der verbleibenden pulsierenden Halbwelle wird die Stromspule mit Strom versorgt, was zu einer pulsierenden Gleichspannung führt. Eine derartige Konstruktion ist sehr einfach, denn man benötigt nur eine einzige Diode, um eine derartige pulsierende Gleichspannung zu erzeugen. Bei Verwendung einer derartig pulsierenden Gleichspannung wird vorausgesetzt, um zu gewährleisten, daß der Anker bedingt durch den kurzen Stromfluß durch die Spule durch eine Halbwelle genügt Zeit hat, eine entsprechende Längsbewegung in Vorschubrichtung in die Spule hinein auszuführen. Ein Betrieb der Spule mit reinem Netzwechselstrom ist genauso möglich, nur hat der Anker dann eine Schwingfrequenz von 100 Hertz, was nur eine relativ geringe Vorschubbewegung des Lötdrahtes gibt. Diese Ausführung soll jedoch auch von der vorliegenden Erfindung umfaßt sein.

Bevorzugt wird jedoch die vorher erwähnte Ausführung, bei der der Anker mit einer Schwingfrequenz von 50 Hertz in der Spule schwingt und hierbei vorausgesetzt wird, daß der Anker nur in der Vorschubrichtung in die Spule durch den magnetischen Kraftfluß gezogen wird, während die entgegengesetzte Bewegung durch ein Rückstellelement bewirkt wird, auf welches der Anker aufläuft. Ein derartiges Rückstellelement kann z. B. eine Druckfeder sein, eine Schwenkelfeder, eine Biegefeder, ein biegeelastisches Element, wie z. B. ein Gummibalg, ein Pneumatikelement, eine Gasdruckfeder oder dergleichen.

Dieses Biegeelement befördert den durch den Stromfluß nach in die Spule gezogenen Anker wieder nach hinten entgegengesetzt zur Vorschubrichtung des Lötdrahtes und damit ist ein Schwingzyklus des Anker beendet.

Wichtig ist nun, daß der Anker neuerungsgemäß mit einer Klemmeinrichtung verbunden ist, die in der Lage ist, in Abhängigkeit von der Ankerbewegung den Lötdraht formschlüssig an einer bestimmten definierten Stelle einzuklemmen und - wiederum in Abhängigkeit von der Bewegung des Ankers - auch wieder freizugeben. Auf diese Weise wird eine variable Vorwärtsbewegung des Lötdrahtes erreicht, wobei Voraussetzung ist, daß der Lötdraht durch ein Zuführungsrohr zur Lötspitze geführt wird und in diesem Zuführungsrohr der Lötdraht einen Reibungswiderstand erfährt, um zu gewährleisten, daß er bei der Rückzugbewegung des Ankers von der Klemmeinrichtung freigegeben wird.

Die Klemmeinrichtung klemmt also den Lötdraht bei in Vorschubrichtung vorwärts bewegtem Anker, während bei rückwärts bewegtem Anker (d. h. entgegen der Vorschubrichtung des Lötdrahtes) der Lötdraht von der Klemmeinrichtung freigegeben wird.

Die Klemmeinrichtung besteht bevorzugt aus einem Klemmteil, welches eine Klemmschneide aufweist, die sich formschlüssig in den Lötdraht einkerbt und diesen Lötdraht zuverlässig festhält.

Damit besteht der Vorteil, daß auch relativ dünne Lötdrähte sicher erfaßt werden können, ohne daß die Gefahr besteht, daß diese Lötdrähte durchtrennt werden oder daß unzulässig starke Kerbmarken auf diesen Lötdrähten erzeugt werden. Daher erstreckt sich das Anwendungsgebiet der vorliegenden Erfindung nicht nur auf die variable Vorwärtsbewegung von Lötdrähten in Lötkolben sondern auch auf die Vorwärtsbewegung von Schweißdrähten in Schweißpistolen oder auf andere Anwendungsgebiete wie z. B. die Vorwärtsbewegung von Entlötlitzen in Lötkolben und anderen Geräten, bei denen es auf eine variable Vorwärtsbewegung eines Drahtes oder dergleichen ankommt.

Eine weitere Verwendung der neuerungsgemäßen elektromagnetischen Vorschubeinrichtung liegt in der Verwendung bei Seilzugantrieben, wo ein Seilzug im Rundumlauf geführt ist und hierbei das Seil mit der neuerungsgemäßen Vorschubeinrichtung intermettierend transportiert wird. Weitere Anwendungsgebiete der Erfindung liegen bei Antrieben zum Kabeleinziehen in der Istallationsbranche oder in der Verwendung bei einem Spulen-Abwicklungsgerät. Eine weitere Verwendung ist bei allen Vorrichtungen gegeben, wo ein Draht oder Stangenantrieb verwendet wird.

Im weiteren läßt sich die neuerungsgemäße Vorschubeinrichtung auch bei einer Spannzange nach dem Prinzip des Vorschubes bei einem Drehbleistift verwenden, wobei die Mine in eine Vorschubbewegung versetzt wird. In dieser Art kann die neuerungsgemäße Vorschubeinrichtung auch zum Spannen und Lösen von Werkzeugen verwendet werden, die in der Industrie Verwendung finden, wobei es darum geht, nach Art einer Spannbewegung ein Werkzeug zunächst zu spannen und dann in einer Vorschubbewegung aus dem Werkzeughalter zu lösen bzw. aus diesem auszuwerfen.

Durch die Möglichkeit der Verwendung dünner dimensionierter Lötdrähte ergibt sich der Vorteil einer Verbesserung der Lötqualität, weil der dünnere Lötdraht nun schneller erwärmt werden kann und die Lötstelle damit sauber wird. Durch die Verwendung eines dünner dimensionierten Lötdrahtes ergibt sich im übrigen der Vorteil, daß der Lötdraht weniger mechanische Verletzungen der Lötspitze verursacht, auf die er aufgedrückt wird.

Durch die Integration der gesamten Vorschubeinrichtung in einem relativ kleinbauenden Lötkolben ist es nun erstmals möglich, auch sehr dünne Drähte in nur wenig Leistung aufnehmende Lötkolben zu verwenden, wodurch nun eine Einhandlötung auch für sehr empfindliche Lötungen vorgenommen werden kann, wie z. B. für 10 Watt-Lötkolben, die an empfindlichen Elektronikteilen verwendet werden.

Damit ist es erstmals möglich, auch den Lötdraht selbst in Form einer Lötdrahtspule im Lötkolben selbst, insbesondere in dessen hinteren Ende, zu integrieren, wobei dieser Lötdraht dann in Form einer Wendel im hinteren Ende einer Bohrung gespeichert wird und der Lötdraht dann durch die Vorschubeinrichtung zur Lötspitze hin geführt wird. Dadurch ergibt sich der Vorteil einer leichten Auswechselbarkeit des Lötdrahtes und insgesamt wird damit ein leichter Lötkolben geschaffen.

Mit der neuerungsgemäßen technischen Lehre ergibt sich der Vorteil, daß durch die Betätigung einer einfachen Impulstaste nun ein genau definierter Vorschubweg von z. B. 3 mm erreicht wird. Die Vorschublänge hängt von verschiedenen Faktoren ab, nämlich von der Leistungsaufnahme der Spule, vom Ziehwiderstand (Reibungswiderstand am Lötdraht), von der Stärke des Lötdrahtes und von möglicherweise eingebauten Anschlägen im Lötkolben, welche die Längsbewegungen des Ankers einstellbar begrenzen. Durch die Veränderung dieser Variablen kann somit eine variable Vorwärtsbewegung des Lötdrahtes erreicht werden.

Wegen der relativ geringen Leistungsaufnahme einer derartigen Spule von z. B. 4 Watt ist es nun auch möglich, den gesamten Lötkolben zusammen mit der Vorschubeinrichtung mit einem Akkumulator zu betreiben.

In einer bevorzugten ersten Ausgestaltung der vorliegenden Erfindung ist die Klemmeinrichtung als federnd gelagerte Klemmhülse ausgebildet.

Bei einer derartigen Klemmeinrichtung ist wichtig, daß mit dem Anker ein Halteteil verbunden ist, welches eine erste, starre Bohrung definiert, durch welche der Lötdraht geführt ist. Schwenkbar zu dieser starren Bohrung des Halteteils, welches unmittelbar und fest mit dem Anker verbunden ist, ist ein Klemmteil mit einer zweiten Bohrung verbunden, wobei dieses Klemmteil schwenkbar zu dem in Längsrichtung bewegbaren Anker gelagert ist. Bei der Verschwenkung der als Klemmschneide ausgebildeten Bohrung des Klemmteiles zu der ortsfesten Bohrung des Halteteiles kommt es somit zu einer Verschiebung der in Ruhestellung miteinander fluchtenden Bohrungen und der Draht wird zwischen beiden Bohrungen eingeklemmt und gekerbt.

Erfindungsgemäß wird nun diese Schwenkbewegung des Klemmteiles mit dessen Klemmbohrung im Vergleich zu der ortsfesten Bohrung des Halteteiles durch das Magnetfeld der Spule selbst bewirkt. Hierzu ist vorgesehen, daß das Klemmteil einseitig federnd schwenkbar am einen Ende des Ankers gelagert ist, wobei als Lagerelement bevorzugt eine Biegefeder verwendet wird. Anstatt einer Biegefeder können jedoch auch andere Federelemente verwendet werden, wie z. B. eine Kunststoffeder, oder eine Kunststoffhülse, die in sich federnd ausgebildet ist.

Durch die Stromerregung der Stromspule kommt es zu einem in Längsrichtung orientierten Magnetfeld, welches den aus Weicheisenmaterial bestehenden Anker in die Spule hineinzieht. Gleichzeitig entstehen jedoch auch radiale Felder, die versuchen, den Anker zu verkippen. Nachdem aber der Anker in einer Längsbohrung in der Spule zwar verschiebbar geführt ist aber gegen Verkippen gesichert ist, kann der Anker selbst nicht verkippen.

Mit dem einen Ende des Ankers ist das Klemmteil verbunden, welches in einer Hülse, die als Joch wirkt, größeren Durchmessers sitzt, der Durchmesser also größer ist als der Durchmesser der Spulenbohrung, in deren Öffnung der Anker bewegbar ist. Aufgrund der einwirkenden radialen Magnetfelder kann somit das Klemmteil verkippen, welches ebenfalls aus einem Weicheisenmetall besteht, so daß das in radialer Richtung von der Spule erzeugte Magnetfeld auf dieses Klemmteil wirkt und dieses Klemmteil in radialer Richtung verkippt. Es kommt somit zu einer Verkippungsbewegung am Anker, wodurch die Klemmbohrung des Klemmteiles nun zu der ortsfesten Bohrung des Halteteils (welches mit dem Anker verbunden ist) verkantet wird. Damit wird die erwünschte Kerbwirkung auf den Lötdraht erreicht.

Dadurch, daß das Klemmteil mit einer Biegefeder an dem in Längsrichtung bewegbaren Anker gelagert ist, kommt es bei einer Rückwärtsbewegung des Ankers (entgegen zur Vorschubrichtung des Lötdrahtes) zu einer Freigabe der Klemmeinrichtung dadurch, daß die Biegefeder wieder zurückschwingt, weil das radiale Feld nun abgeschaltet ist, ebenso wie das axiale Feld, welches den Anker in Vorschubrichtung in die Spule hineingezogen hatte. Die Feder bringt also das Klemmteil wieder in eine neutrale Mittelposition und damit kommen die beiden Bohrungen (Bohrung des Klemmteiles und Bohrung des Halteteiles) in eine fluchtende Gegenüberlage, wodurch der Lötdraht freigegeben wird. Ein unbeabsichtigtes Zurückziehen des Lötdrahtes bei dieser rückwärtsgehenden Bewegung des Ankers und des Klemmteils sowie des Halteteils wird vermieden dadurch, daß der Lötdraht durch ein Zuführungsrohr nach vorne zur Lötspitze geführt wird und in diesem Zuführungsrohr ein entsprechender Reibungswiderstand besteht, der den Lötdraht an seiner Position hält.

Ebenso findet beim Abzug des Lötdrahtes von einer Lötspule oder einer Lötwendel ebenfalls eine Reibung statt, die ebenfalls ein unbeabsichtigtes Zurückziehen des Lötdrahtes entgegen der Vorschubrichtung verhindert.

Die Vorratsspule, auf welche der Lötdraht aufgewickelt ist, kann auch im Griffkörper selbst angeordnet sein, und zwar derart, daß die Achse der Vorratsspule senkrecht zur Vorschubbewegung angeordnet ist. Es ergibt sich dabei der Vorteil, daß keine Beschädigungen des Lötdrahtes stattfinden und daß dieser vor Korrosion geschützt ist.

Im folgenden wird die Erfindung anhand von mehrere Ausführungswege darstellenden Zeichnungen näher erläutert. Hierbei gehen aus den Zeichnungen und ihrer Beschreibung weitere wesentliche Merkmale und Vorteile der Erfindung hervor.

Es zeigen:
- Figur 1:: schematisiert einen Lötkolben nach der Erfindung teilweise im Schnitt nach einer ersten Ausführungsform;
- Figur 2:: eine vergrößerte Darstellung des Lötkolbens nach Figur 1 in einer teilweise modifizierten Ausführungsform;
- Figur 3:: ein Schnitt durch das Klemmteil in Richtung der Linie III-III in Figur 4;
- Figur 4:: Stirnansicht des Klemmteiles in Richtung IV-IV in Figur 3;
- Figur 5:: eine abgewandelte Ausführungsform einer Vorschubeinrichtung gegenüber Figur 2;
- Figur 6:: eine abgewandelte Ausführungsform eines Halteteils im Vergleich zu Figur 5;
- Figur 6a:: eine weitere Abwandlung der Vorschubeinrichtung;
- Figur 7:: Schnitt durch den hinteren Teil eines Lötkolbens mit Integration der Lotdrahtspule im hinteren Teil des Lötkolbens;
- Figur 8:: die Jochausführung eines Spulenkörpers.

Der Lötkolben nach der Erfindung weist einen Griff 1 auf, in dem eine Klemmeinrichtung nach der Erfindung integriert ist. Am vorderen Ende des Lötkolbens ist ein Lötrohr 19 angeordnet, zu dem parallel ein Zuführungsrohr 4 verläuft, durch welches der Lötdraht 3 nach vorne zur Lötspitze 23 transportiert wird. Die beiden Teile 4,19 werden durch ein Klemmteil 18 miteinander verbunden.

Am hinteren Ende des Griffes 1 ist eine Vorratsrolle 2 angeordnet, auf der in Form einer Spule ein Lötdraht 3 aufgewickelt ist, wobei die gesamte Rollenhalterung 17 als separates Element an der Hinterseite des Griffes 1 angeordnet ist.

Bei der Erfindung kann die Zuführung des Lötdrahtes auch durch eine drehbare Spule erfolgen, die extern außerhalb des Löt- oder Schweißgerätes angeordnet ist. Der Lötdraht ist dann vorzugsweise auf einer drehbaren Spule aufgewickelt und gelangt von dort in die neuerungsgemäße Vorschubeinrichtung.

Desweiteren ist es auch möglich, den Lötdraht bzw. die Vorratsspule im Griffkörper selbst anzuordnen, wobei sich der Vorteil ergibt, daß keine Beschädigungen des Lötdrahtes vorliegen und dieser vor Korrosion und Verschmutzung (Staub etc.) geschützt ist.

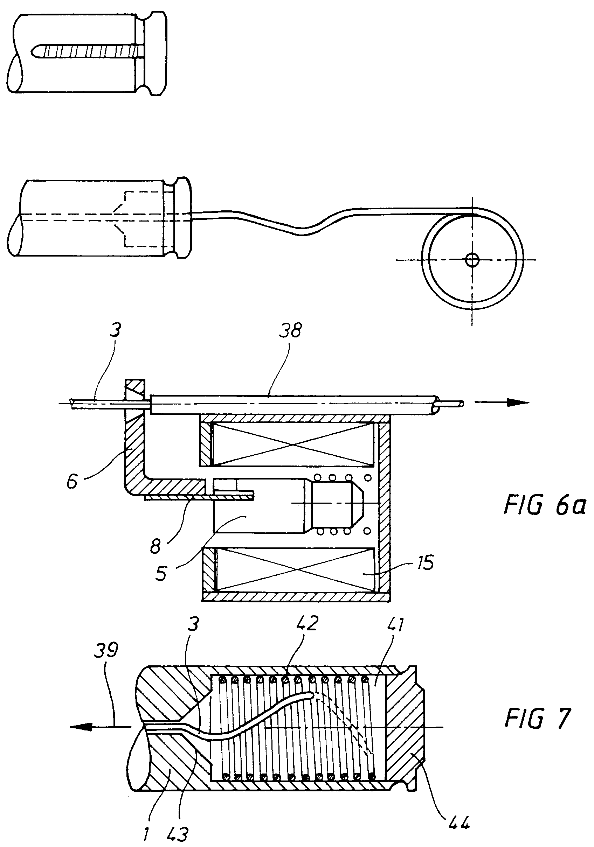

Bei der Erfindung ist zusätzlich auch eine momentane Vorratsanzeige des Lötdrahtmagazins nach Figur 7 vorgesehen. Diese Vorratsanzeige besteht im wesentlichen aus einem Schlitz im hinteren Bereich des Lötkolbens oder der Schweißeinrichtung, wobei über den Schlitz ein Sichteinblick auf den nach Art einer Spule aufgewickelten Löt- oder Schweißdraht möglich ist.

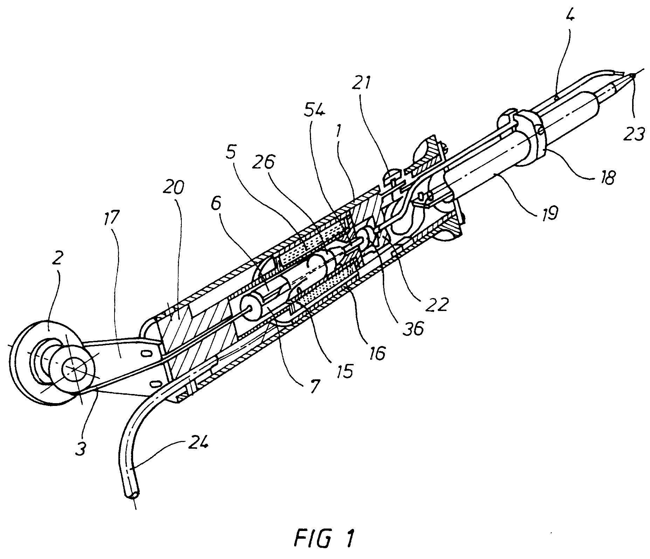

Die später noch zu beschreibende Figur 7 zeigt, daß anstatt der in Figur 1 gezeigten Rollenhalterung 17 das hintere Ende des Griffes 1 eine zentrale Ausnehmung 41 aufweisen kann, in der eine Lötdrahtspule 42 in Form einer Wendel angeordnet ist, aus deren Mittebereich heraus der Lötdraht 3 nach vorne in Vorschubrichtung 39 heraus abgezogen wird. Die Ausnehmung 41 ist an der hinteren Stirnseite durch einen Deckel 44 verschlossen. Das vordere Ende der Ausnehmung 41 wird durch einen Konus 43 gebildet, daß der Abzugswiderstand auf den Lötdraht 3 möglichst gering gehalten wird.

In an sich bekannter Weise wird durch den Griff 1 noch das Kabel 24 hindurchgeführt, welches die elektrische Versorgung für die Heizpatrone enthält.

Am hinteren Ende des Griffes 1 ist noch ein Griffabschluß 20 vorhanden, an dem die Rollenhalterung 17 befestigt ist.

Im Innenraum des Lötkolbens ist eine Stromspule 15 angeordnet, die in einem bevorzugten Ausführungsbeispiel eine axiale Länge v. z. B. 40 mm aufweist. Der Außendurchmesser einer derartigen Stromspule kann im Bereich von etwa 10 bis 20 mm sein.

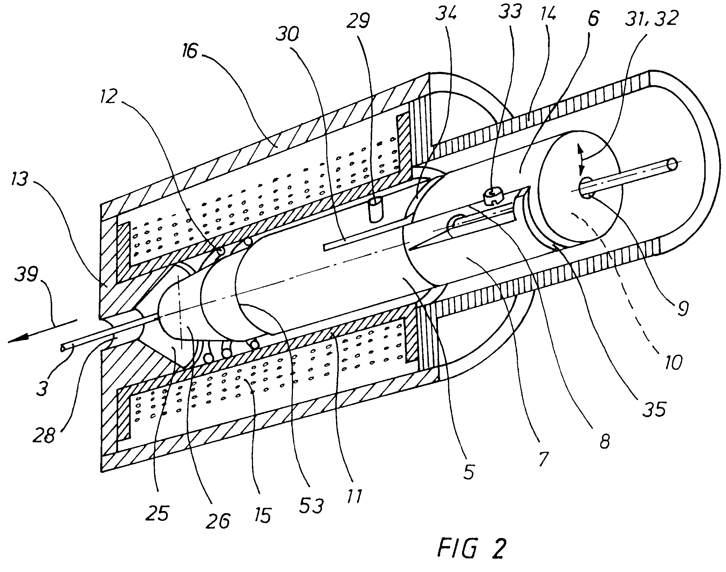

Im Innenraum der Stromspule 15 ist ein Anker 5 in Vorschubrichtung 39 und in Gegenrichtung hierzu bewegbar ausgebildet, wobei mit dem Anker ein Klemmteil 6 und ein Halteteil 7 verbunden sind. Im gezeigten Ausführungsbeispiel nach Figur 1 ist die eine Stirnseite des Ankers als Zentrierhülse 26 ausgebildet (wie auch in Figur 2 gezeigt), nur daß die Zentrierhülse 26 gemäß Figur 1 noch zusätzlich mit einem Rohr 54 verbunden ist, welches mit einem ortsfesten Anschlag 36 zusammenwirkt. Rohr 54 und Anschlag 36 bilden ein Stück. Der Anschlag 36 kann hierbei gummielastisch ausgebildet sein, um entsprechende Schlaggeräusche zu vermeiden.
Im Ausführungsbeispiel nach Figur 2 fehlt hingegen ein derartiger Anschlag. Beide Ausführungsformen sollen vom Erfindungsgedanken der vorliegenden Erfindung umfaßt sein.

Im vorderen Bereich des Griffes 1 ist eine Schalttaste 21 angeordnet, bei deren Betätigung ein Stromfluß durch die Stromspule dauernd erzeugt wird, und zwar solange, wie die Schalttaste 21 gedrückt gehalten wird.

Gemäß Figur 2 besteht die Stromspule 15 aus einem äußeren Hülsenkörper 16, der bevorzugt aus Weicheisenmaterial besteht. Die Stromspule 15 ist auf einen radial innenliegenden Hülsenkörper 11 aufgewickelt, der ebenfalls aus einem Kunststoffteil besteht, welches bevorzugt abriebfest in seiner zentralen Innenbohrung ausgebildet ist.

Die vordere Stirnseite des Ankers 5 ist als Anschlag 53 ausgebildet und an diesem Anschlag ist die vorher erwähnte Zentrierhülse 26 befestigt, die an der hinteren Stirnseite konisch zuläuft und in einen entsprechenden Zentrierkonus 25 eintaucht, der in einem vorderen Polteil 13 eingearbeitet ist. Das Polteil 13 weist eine zentrale Bohrung 28 auf, durch welche der Lötdraht 3 geführt ist.

Eine Rückstellfeder 12, bevorzugt als Schraubendruckfeder ausgebildet, stützt sich mit ihrem einen Ende an dem hinteren Polteil 13 ab und mit ihrem anderen Ende an dem Anschlag 53 des Ankers 5.

Der hintere Bereich der Stromspule 15 wird begrenzt durch ein vorderes Polteil 14, welches aus einem nicht-magnetischen Material bestehen kann.

Es wird hierbei bevorzugt, wenn das vordere Polteil 13 aus einem magnetisierbaren Material besteht; dies ist jedoch nicht lösungsnotwendig, ebenso kann auch das hintere Polteil 14 aus einem magnetisierbaren Material oder aus einem nicht-magnetisierbaren Material bestehen.

Die Figur 12 zeigt die neuerungsgemäße Stromspule, die anstatt in Form eines Hülsenkörpers nun als Jochausführung vorliegt. Die Spule 15 ist hierbei in an sich vorteilhafter magnetischer Wirkung, wobei die Magnetlinien über das Joch geschlossen werden, in einem Joch 55 angeordnet. Außerhalb des Jochs 55 ist dann in dem Halteteil 38 der Lötdraht 3 geführt, der mittels des Klemmteils 6 transportiert wird. Durch die Jochausführung ergibt sich der Vorteil der Gewichtsersparnis sowie eine billigere Bauweise.

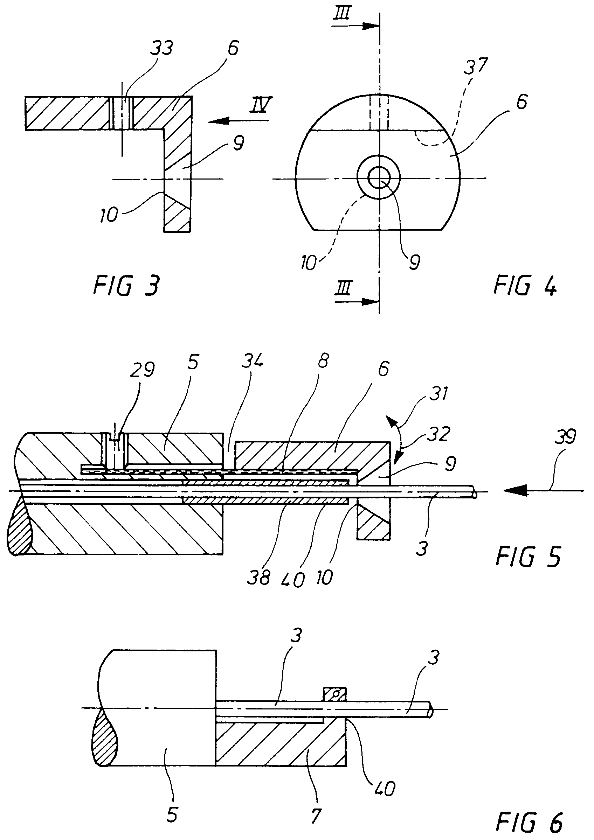

Fest mit dem vorderen Stirnende des Ankers 5 ist ein Halteteil 7 verbunden, welches im Schnitt in Figur 6 näher dargestellt ist. Das Halteteil 7 besteht im wesentlichen aus einem einfachen Körper, der an seinem vorderen Ende eine Bohrung 40 definiert, die demzufolge fest mit dem Anker 5 selbst verbunden ist.

Schwenkbar zu dem Anker 5 ist hingegen ein Klemmteil 6 angeordnet, wobei die Verschwenkung über eine als Blattfeder ausgebildete Feder 8 erfolgt.

Die als Biegefeder (Flachfeder) bevorzugt ausgebildete Feder 8 wird hierbei in einem Schlitz 30 des Ankers 5 gehalten und durch eine Schraube 29 befestigt. Die Feder 8 greift über das vordere Stirnende des Ankers 5 hinaus und bildet im Bereich eines Spaltes 34 zwischen dem vorderen Stirnende des Ankers 5 und dem rückwärtigen Stirnende des Klemmteils 6 einen freien biegbaren Abschnitt auf, der die freie Verschwenkbarkeit des Klemmteils 6 in den Pfeilrichtungen 31,32 gewährleistet. Voraussetzung hierfür ist ferner, daß zwischen dem vorderen Ende des Klemmteils 6, welches gemäß Figur 3 und 4 etwa scheibenförmig ausgebildet und eine Bohrung 9 mit einer Schneidkante 10 aufweist, ein Spiel 35 vorhanden ist, um dieses Verkippen oder Verschwenken des Klemmteils 6 in bezug zu dem ankerfesten Halteteil 7 zu gewährleisten.

Die Feder 8 wird im Klemmteil 6 durch eine Schraube 33 gehalten.

Wichtig ist, daß das Klemmteil 6 aus einem magnetisierbaren Material besteht, vorzugsweise Weicheisenmaterial, um durch ein entsprechendes, von der Stromspule 15 erzeugtes radiales Magnetfeld in Pfeilrichtung 31 nach oben ausgelenkt zu werden.

Um der Schneidkante 10 eine entsprechende Festigkeit gegen mechanischen Abrieb zu gewährleisten kann es vorgesehen sein, daß das Material im Umfangsbereich um die Schneidkante 10 aus einem anderen Material besteht wie das Material des Klemmteils 6. Ebenso kann es vorgesehen sein, daß das Klemmteil aus einem härtbaren Material besteht, welches magnetisierbar ist.

Wird nun ein Strom durch die Stromspule 15 hindurchgegeben, bevorzugt ein pulsierender Gleichstrom, dann wird der Anker in Vorschubrichtung 39 entgegen der Kraft der Feder 12 in die Stromspule 15 hineingezogen und die Rückstellfeder 12 wird hiermit vorgespannt. Sobald diese Stromhalbwelle vorbei ist, hört der Stromfluß durch die Stromspule 15 auf, diese wird also vergleichsweise abgeschaltet und diese kurze Zeit reicht aus, die Rückstellfeder 12 zu entspannen, um den Anker 5 in Gegenrichtung zur Pfeilrichtung 39 in die Stromspule 15 zurückzubewegen.

Bei der Vorwärtsbewegung des Ankers 5 in Pfeilrichtung 39 hat aber gleichzeitig ein radiales Magnetfeld der Stromspule auf das Klemmteil 6 gewirkt und hat dieses in Pfeilrichtung 31 entgegen der Kraft der Feder 8 nach oben ausgelenkt, wodurch die mit der Schneidkante 10 versehene Bohrung 9 sich zu der ortsfesten Bohrung 40 des Halteteils 7 verschiebt und hierdurch es zu dem gewünschten Verklemmungseffekt kommt. Die beiden Bohrungen 9,40 verkeilen sich also zueinander und klemmen zwischen sich den Lötdraht 3 ein, der somit bei einer Bewegung des Ankers 5 in Pfeilrichtung 39 in dieser Vorschubrichtung 39 mitgenommen wird.

Die Klemmwirkung auf den Lötdraht hängt von verschiedenen Umständen ab. Ein Umstand ist die Rückstellkraft der Feder 8 ein anderer Umstand, der variabel ist ist die Größe des radialen Magnetfeldes, welches auf das Klemmteil 6 wirkt, um dieses in Pfeilrichtung 31 nach oben auszulenken. Beide Faktoren können entsprechend den Erfordernissen eingestellt und gewählt werden. Ebenso kann die Klemmwirkung durch die Gestaltung der Schneidkante 10 im Klemmteil 6 eingestellt und verändert werden.

Beim Zurückgehen des Ankers 5 entspannt sich die Rückstellfeder 12 und nachdem die Stromspule 15 kurzzeitig abgeschaltet ist, fehlt das radiale auf das Klemmteil 6 wirkende Magnetfeld, so daß das gesamte Klemmteil in Pfeilrichtung 32 nach unten verschwenkt und sich hierdurch die beiden Bohrungen 9,40 zueinander zentrieren und dadurch der Lötdraht 3 von der Schneidkante 10 freigegeben wird. Gegen ein unbeabsichtiges Zurückziehen in Gegenrichtung zur Pfeilrichtung 39 ist der Lötdraht dadurch gesichert, daß Reibungswiderstände im Zuführungsrohr 9 und bei der Abwicklung von dem Rollenhalter 17 bestehen, so daß dieser ortsfest verbleibt, und lediglich der Anker 5 mit der Klemmeinrichtung 6 und dem Halteteil 7 nach hinten fährt, ohne den Lötdraht 3 nach hinten in Gegenrichtung zur Pfeilrichtung 39 mitzunehmen.

Wichtig ist, daß die zentrale Mittenbohrung in der Stromspule so dimensioniert ist, daß zwar der Anker 5 in Richtung seiner Längsachse leicht hin und her bewegt werden kann, daß aber im wesentlichen Verkantungskräfte auf den Anker nicht zu einer Verkantung dieses Ankers in dieser zentralen Mittenbohrung der Stromspule 15 führen und daß diese Verkantungskräfte lediglich auf das Klemmteil 3 wirken.

Zur weiteren Zentrierung des Ankers in der Stromspule kann es gemäß Figur 1 vorgesehen sein, an der Zentrierhülse 26 das vorher erwähnte Rohr 54 anzuordnen, welches dann durch eine Bohrung der Stromspule hindurchgreift und den Anker somit gegen Verkantung sichert.

Wichtig ist, daß das am hinteren Stirnende der Stromspule ansetzende hintere Polteil 14 einen größeren Durchmesser aufweist als der Innendurchmesser der Stromspule 15, in welcher der Anker bewegbar ist, um dem Klemmteil 6 das gewünschte Verkantungsspiel in den Pfeilrichtungen 31,32 zuzuordnen. Das Klemmteil kann im Durchmesser kleiner sein für das notwendige Spiel. Dann könnten die Durchmesser von Innendurchmesser der Spule 15 und Polteil 14 gleich sein.

Die Figuren 3 und 4 zeigen das Klemmteil 6 im Schnitt und in der Vorderansicht, wo erkennbar ist, daß die Schneidkante 10 als Konusbohrung ausgebildet ist. Für die Schraube 33 ist lediglich das Befestigungsgewinde angedeutet, mit dem das Halteteil mit der Feder 8 verbunden wird.

Die Figur 5 zeigt eine weitere Ausführungsform einer Klemmeinrichtung, wobei im Vergleich zur Figur 2 anstatt des Halteteils 7 ein Halteteil 38 verwendet wird, welches im wesentlichen aus einem Rohrstück besteht, welches stirnseitig an der Hinterseite des Ankers 5 befestigt ist. Wichtig ist, daß das Halteteil 7,38 aus einem nicht-magnetischen Material besteht.

Die Figur 6 zeigt das Halteteil 7 im Schnitt gemäß Figur 2, wo erkennbar ist, daß der Lötdraht 3 durch die ankerfeste Bohrung 40 hindurchgeführt wird, der dann der verschwenkbaren Bohrung 9 (Pfeilrichtungen 31,32 - Figur 5) des Klemmteils 6 gegenüberliegt.

Die Figur 7 zeigt eine Alternative einer Lötdrahtzuführung, wo anstatt der in Figur 1 geschilderten Rollenhalterung 17 nun das hintere Ende des Griffes 1 mit einer zentralen Ausnehmung 41 versehen ist. Im übrigen wird noch darauf hingewiesen, daß das Lötrohr 19 in einem Befestigungsteil 22 am vorderen Ende des Griffes 1 des Lötkolbens gehalten wird.

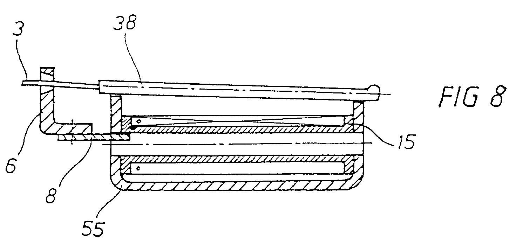

In den Figuren 8 bis 10 ist die weitere Ausführungsform einer Klemmeinrichtung dargestellt, die ebenfalls vom Erfindungsgedanken umfaßt wird. Bei dieser Klemmeinrichtung ist die Einwirkung von radialen magnetischen Feldern nicht notwendig, um ein Klemmteil zum Verkippen zu bringen. Dieses Klemmteil 46 ist hingegen stets im Klemmeingriff mit dem Lötdraht 3. Das Klemmteil 46 besteht gemäß den Figuren 9 und 10 im wesentlichen aus einem membranförmigen Teil, welches am Umfang verteilt radiale Schlitze 48 aufweist, die in einer zentralen Mittenbohrung 47 münden. Diese Bohrung 47 ist als Schneidkante 10 ausgebildet. Um die Schlitze 48 gegen Einreißen in dem membranförmigen Teil zu sichern sind die äußeren radialen Enden der Schlitze durch entsprechende Bohrungen erweitert.

Das Klemmteil 46 ist wie eine Membrandose oder wie ein Membranblech verbiegbar, so daß die einzelnen durch die Schlitze 48 definierten Klemmsegmente 49 sich klemmend und federnd am Außenumfang des Lötdrahtres 3 anlegen.

Das gesamte Klemmteil 46 ist entweder aus einem Kunststoffmaterial, einem Metallmaterial oder aus einem weichelastischen Material, wie z. B. Gummi, Kautschuk oder dergleichen.

Das Klemmteil 46 ist im Anker 5 an der vorderen Stirnseite eingebaut und wird durch einen vorderen Halter 45 befestigt.

Nachdem die Klemmsegmente 49 in ständigem Klemmeingriff mit dem Lötdraht 3 sich befinden, wird mit der Vorwärtsbewegung des Ankers 5 in Vorschubrichtung 39 der Lötdraht stets mitgenommen. Eine Rückzugsbewegung des Lötdrahtes in Gegenrichtung zur Pfeilrichtung 39 wird jedoch dadurch verhindert, daß die Reibungswiderstände am Lötdraht so groß sind, daß dieser stehenbleibt und die Klemmeinrichtung 46 sich über ihn hinwegbewegt. Aufgrund der Gestaltung des Klemmteils 46 in Form einer nach außen gewölbten Membran kommt es also zu einem Kniehebeleffekt, wodurch sich die Klemmsegmente 49 federnd nach außen verformen und hierdurch eine leichte Reibung am Lötdraht 3 erzeugen, der diesen Lötdraht nicht in Gegenrichtung zur Vorschubrichtung 39 mitnimmt.

Eine Alternative zu dieser Ausführungsform hat die Figur 11. Dort ist gezeigt, daß im Anker 5 im Bereich von radial am Umfang verteilt angeordneten Ausnehmungen Schwenklager 51 vorhanden sind, in denen jeweils eine Klinke 50 schwenkbar gelagert ist, wobei jede Klinke eine Spitze aufweist, die sich an der Oberfläche des Lötdrahtes 3 einkerbt. Es sind ferner ankerfeste Anschläge 52 vorhanden, die gewährleisten, daß die Auslenkung der Klinken beim Lösen des Lötdrahtes entgegen der Pfeilrichtung 39 begrenzt werden.

### ZEICHNUNGS-LEGENDE

- 1: Griff
- 2: Vorratsrolle
- 3: Lötdraht
- 4: Zuführungsrohr
- 5: Anker
- 6: Klemmteil
- 7: Halteteil
- 8: Feder
- 9: Bohrung
- 10: Schneidkante
- 11: Hülsenkörper (Spule 15)
- 12: Rückstellfeder
- 13: Polteil (hintere)
- 14: Polteil (vordere)
- 15: Stromspule
- 16: Hülsenkörper
- 17: Rollenhalterung
- 18: Klemmteil
- 19: Lötrohr
- 20: Griffabschluß
- 21: Schalttaste
- 22: Befestigungsteil
- 23: Lötspitze
- 24: Kabel
- 25: Zentrierkonus
- 26: Zentrierhülse
- 28: Bohrung
- 29: Schraube
- 30: Schlitz
- 31: Pfeilrichtung
- 32: "
- 33: Schraube
- 34: Spalt
- 35: Spalt
- 36: Anschlag
- 38: Halteteil
- 39: Vorschubrichtung
- 40: Bohrung (Halteteil)
- 41: Ausnehmung
- 42: Lötdrahtspule
- 43: Konus
- 44: Deckel
- 45: Halter
- 46: Klemmteil
- 47: Bohrung
- 48: Schlitz
- 49: Klemmsegment
- 50: Klinke
- 51: Schwenklager
- 52: Anschlag
- 53: "
- 54: Rohr
- 55: Joch

## Patentansprüche

1. Elektromagnetische Vorschubeinrichtung zur variablen Vorwärtsbewegung von Löt- oder Schweißdraht in einem Lotkolben oder einer Schweißpistole, wobei der Löt- oder Schweißdraht auf einer Vorratsrolle am rückwärtigen Ende des Lötkolbens oder der Schweißpistole angeordnet und von dort ausgehend in das Innere des Lötkolbens oder der Schweißpistole zu einer Vorschubeinrichtung geführt ist, die eine Stromspule und einen in seiner Längsrichtung beweglichen Tauchanker enthält und den Löt- oder Schweißdraht über ein Zuführungsrohr intermittierend an die Spitze des Lötkolbens oder der Schweißpistole führt,
**dadurch gekennzeichnet,** daß der Löt- oder Schweißdraht in der Vorschubeinrichtung von einem federnd gelagertem Klemmteil (6) des Tauchankers (5) erfaßt und gegen ein Halteteil (7) gedrückt wird und in Vorschubrichtung mit der Bewegung des Tauchankers (5) transportiert wird, wobei am Tauchanker (5) eine Rückstellfeder (12) angeordnet ist und die Stromspule ein nach außen weisendes Polteil (14) als Joch aufweist, wobei das an einer Biegefeder (8) federnd gelagerte Klemmteil (6) magnetisch durchflutet wird und verkippt und hierbei mit einer Auslenkung des Klemmteils (6) der Löt- oder Schweißdraht scherenartig zwischen einer Schneidkante (10) und einem Halteteil (7,38) erfaßt wird.

2. Vorschubeinrichtung nach Anspruch 1, **dadurch gekennzeichnet,** daß die Vorschubeinrichtung als Klemmeinrichtung ausgestaltet ist, wobei der Löt- oder Schweißdraht (3) durch eine erste starre Bohrung eines Halteteils (7,38) läuft und schwenkbar zum Halteteil (7,38) ein Klemmteil (6) ausgebildet ist, welches eine zweite Bohrung (9) aufweist, wobei in Ruhestellung die erste und die zweite Bohrung miteinander fluchten.

3. Vorschubeinrichtung nach Anspruch 1, **dadurch gekennzeichnet,** daß die Vorschubeinrichtung mit Joch- und Polausbildung die Stromspule (15) mit dem Tauchanker (5) und dem daran an einer Biegefeder (8) gelagerten Klemmteil (6) aufweist, wobei der Löt- oder Schweißdraht (3) außerhalb der Stromspule (15) durch das Halteteil (38) geführt ist (Figur 6a).

## Claims

1. An electromagnetic feeding device for the variable forward movement of soldering or welding wire in a soldering iron or in a welding gun, in which the soldering or welding wire is arranged on a storage roll at the rearward end of the soldering iron or of the welding gun and, proceeding from there, is guided into the interior of the soldering iron or of the welding gun to a feeding device, which contains a current coil and a plunger-type armature movable in its longitudinal direction and guides the soldering or welding wire via a supply tube intermittently to the tip of the soldering iron or of the welding gun,
characterised in that the soldering or welding wire is picked up in the feeding device by a resiliently mounted clamping member (6) of the plunger-type armature (5) and is pressed against a holding member (7) and is transported in the feeding direction with the movement of the plunger-type armature (5), in which a restoring spring (12) is arranged on the plunger-type armature (5) and the current coil has an outwardly pointing pole member (14) as yoke, in which the clamping member (6), which is resiliently mounted on a cantilever spring (8), is flooded through magnetically and tilts and in so doing, with a deflection of the clamping member (6), the soldering or welding wire is grasped in a shearing manner between a cutting edge (10) and a holding member (7, 38).

2. A feeding device according to Claim 1, characterised in that the feeding device is constructed as a clamping device, in which the soldering or welding wire (3) runs through a first rigid bore of a holding member (7, 38) and a clamping member (6) is constructed so as to be swivellable to the holding member (7, 38), which clamping member (6) has a second bore (9), in which in the position of rest the first and the second bores are in alignment with each other.

3. A feeding device according to Claim 1, characterised in that the feeding device with yoke and pole constructions has the current coil (15) with the plunger-type armature (5) and with the clamping member (6) mounted thereon on a cantilever spring (8), in which the soldering or welding wire (3) is guided outside the current coil (15) through the holding member (38) (Figure 6a).

## Revendications

1. Dispositif d'avance électromagnétique pour le mouvement d'avance variable d'un fil d'apport dans un appareil à braser ou un pistolet à souder, étant précisé que le fil d'apport est disposé sur un rouleau de réserve à l'extrémité arrière de l'appareil à braser ou du pistolet à souder et, de là, est amené à l'intérieur de l'appareil à braser ou du pistolet à souder vers un dispositif d'avance qui contient une bobine ampèremétrique et un induit plongeur mobile dans son sens longitudinal et qui amène de façon intermittente le fil d'apport à la pointe de l'appareil à braser ou du pistolet à souder, par l'intermédiaire d'un tube d'amenée, **caractérisé** en ce que le fil d'apport est saisi dans le dispositif d'avance par un élément de serrage (6), monté à ressort, de l'induit plongeur (5) et pressé contre un élément d'attache (7), et est transporté dans le sens d'avance avec le mouvement de l'induit plongeur (5), étant précisé qu'un ressort de rappel (12) est disposé sur l'induit plongeur (5) et que la bobine ampèremétrique comporte comme culasse une pièce polaire (14) dirigée vers l'extérieur, et que l'élément de serrage (6) monté à ressort sur un ressort de flexion (8) est traversé par un courant magnétique et bascule, le fil d'apport étant saisi à la manière de ciseaux entre un tranchant (10) et un élément d'attache (7, 38) avec une déviation de l'élément de serrage (6).

2. Dispositif d'avance selon la revendication 1, caractérisé en ce que le dispositif d'avance est conçu comme un dispositif de serrage, étant précisé que le fil d'apport (3) passe par un premier perçage rigide d'un élément d'attache (7, 38) et qu'il est prévu, pivotant par rapport a l'élément d'attache (7, 38), un élément de serrage (6) qui comporte un second perçage (9), les premier et second perçages étant dans l'alignement l'un de l'autre en position de repos.

3. Dispositif d'avance selon la revendication 1, caractérisé en ce que le dispositif d'avance pourvu d'une culasse et d'un pôle comporte la bobine ampèremétrique (15) avec l'induit plongeur (5) et l'élément de serrage (6) monté sur celui-ci au niveau d'un ressort de flexion (8), le fil d'apport (3) étant guidé à l'extérieur de la bobine ampèremétrique (15) à travers l'élément d'attache (38) (figure 6a).
